# EUROPEAN PATENT APPLICATION

(11) **EP 4 054 052 A1**
(43) Date of publication of application: **07.09.2022**
(21) Application number: 20880455.9
(22) Date of filing: 26.10.2020
(51) Int. Cl.: H02J 13/00, H02J 3/38

(54) **SERVER APPARATUS AND MANAGEMENT METHOD**

(30) Priority: 28.10.2019 JP 2019195530
(71) Applicant: Kyocera Corporation, Kyoto-shi Kyoto 612-8501 (JP)
(72) Inventor: SHIGA, Akihiro, Kyoto-shi, Kyoto 612-8501 (JP)
(74) Representative: TBK
(86) International application number: PCT/JP2020/040112
(87) International publication number: WO 2021/085381

(57) **Abstract**

A server apparatus is an apparatus for managing a plurality of pieces of equipment including one or more distributed power supplies. The server apparatus includes a processor configured to execute an association process of associating, for each of a plurality of pieces of equipment, an equipment identifier specific to a piece of equipment, among the plurality of pieces of equipment with a user identifier specific to a user of the piece of equipment, and a registration process of registering, in a case that a specific user selects a combination of two or more pieces of equipment associated with a user identifier of the specific user, the combination of the two or more pieces of equipment as a combination of equipment displayed on an identical monitoring screen.

## Description

### Technical Field

The present disclosure relates to a server apparatus and a management method used in a power management system.

### Background Art

In a case that a distributed power supply is provided in a power consumer's facility, the power status of the distributed power supply needs to be remotely monitored. A remote monitoring service is known in which, in order to meet the need described above, a monitoring screen for the distributed power supply is displayed on a terminal apparatus of a user of the distributed power supply (see, for example, Patent Literature 1).

### Citation List

### Patent Literature

Patent Literature 1: JP 2013-157409 A

### Summary

A server apparatus according to a first aspect is an apparatus for managing a plurality of pieces of equipment including one or more distributed power supplies. The server apparatus includes a processor configured to execute an association process of associating, for each of a plurality of pieces of equipment, an equipment identifier specific to a piece of equipment, among the plurality of pieces of equipment, with a user identifier specific to a user of the piece of equipment, and a registration process of registering, in a case that a specific user selects a combination of two or more pieces of equipment associated with a user identifier of the specific user, the combination of the two or more pieces of equipment as a combination of equipment to be displayed on an identical monitoring screen.

A management method according to a second aspect is a method for managing a plurality of pieces of equipment including one or more distributed power supplies. The management method includes associating, for each of the plurality of pieces of equipment, an equipment identifier specific to a piece of equipment, among the plurality of pieces of equipment with a user identifier specific to a user of the piece of equipment, and registering, in a case that a specific user selects a combination of two or more pieces of equipment associated with a user identifier of the specific user, the combination of the two or more pieces of equipment as a combination of equipment displayed on an identical monitoring screen.

### Brief Description of Drawings

FIG. 1 is a diagram illustrating a power management system according to an embodiment.
FIG. 2 is a diagram illustrating a configuration of a facility according to an embodiment.
FIG. 3 is a diagram illustrating a configuration of a remote monitoring server according to an embodiment.
FIG. 4 is a diagram illustrating an equipment information DB according to an embodiment;
FIG. 5 is a diagram illustrating a measurement data DB according to an embodiment.
FIG. 6 is a diagram illustrating a user information DB according to an embodiment.
FIG. 7 is a diagram illustrating an example of an association process executed by an association processor and an example of a registration process executed by a registration processor according to an embodiment.
FIG. 8 is a diagram illustrating an example of a display screen displayed on a terminal apparatus during registration process executed by the registration processor according to an embodiment.
FIG. 9 is a diagram illustrating an example of measurement data included in a monitoring screen that a display processor causes the terminal apparatus to display according to an embodiment.
FIG. 10 is a diagram illustrating an example of case 2 according to an embodiment.
FIG. 11 is a diagram illustrating another example of case 2 according to an embodiment.
FIG. 12 is a diagram illustrating an example of case 3 according to an embodiment.
FIG. 13 is a diagram illustrating another example of case 3 according to an embodiment.
FIG. 14 is a diagram illustrating a yet another example of case 3 according to an embodiment.
FIG. 15 is a diagram illustrating an example of a display screen displayed on the terminal apparatus during cancellation process executed by a cancellation processor according to an embodiment.
FIG. 16 is a diagram illustrating an operation sequence in a power management system according to an embodiment.

### Description of Embodiments

In a case that a plurality of distributed power supplies are used by one user, when a different monitoring screen is provided for each of the distributed power supplies, there is a problem in that the user cannot check the power status of the plurality of distributed power supplies at a time, leading to degraded convenience of the user.

Thus, an object of the present disclosure is to enable the convenience of the user to be improved in a remote monitoring service for distributed power supplies.

Embodiments will be described with reference to the drawings. In the description of the drawings, the same or similar parts are denoted by the same or similar reference signs.

### Power Management System

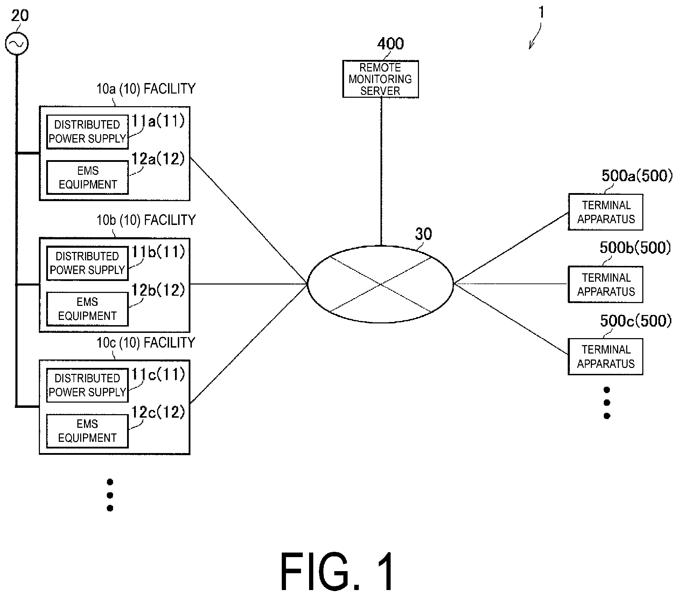

First, a power management system according to an embodiment will be described. FIG. 1 is a diagram illustrating a power management system 1 according to an embodiment.

As illustrated in FIG. 1, the power management system 1 includes a plurality of facilities 10 (10a, 10b, 10c, ...), a remote monitoring server 400, and a plurality of terminal apparatuses 500 (500a, 500b, 500c, ...). Each of the facilities 10, the remote monitoring server 400, and each of the terminal apparatuses 500 are connected to one another via a network 30.

The network 30 is, for example, a wide area network. The network 30 may include a Wireless Wide Area Network (WWAN) or the Internet.

Each facility 10 is a consumer's facility that receives power supplied from a power grid 20. Each facility 10 includes a distributed power supply 11 and Energy Management System (EMS) equipment 12. In the example illustrated in FIG. 1, the facility 10a includes a distributed power supply 11a and EMS equipment 12a, the facility 10b includes a distributed power supply 11b and EMS equipment 12b, and a facility 10c includes a distributed power supply 11c and EMS equipment 12c.

The distributed power supply 11 is an apparatus including at least a function to output electrical power. Types of distributed power supplies include, for example, solar cells, storage batteries, and fuel cells. In FIG. 1, only one distributed power supply 11 provided in each facility 10 is illustrated, but each facility 10 may include a plurality of distributed power supplies.

The EMS equipment 12 is an apparatus (power management apparatus) that manages power information related to the facility 10. The EMS equipment 12 may include a function to control the distributed power supply 11.

The remote monitoring server 400 is an example of a server apparatus that manages a plurality of pieces of equipment including one or more distributed power supplies 11 and one or more pieces of EMS equipment 12. The remote monitoring server 400 provides a remote monitoring service to a user of the terminal apparatus 500. For each facility 10, the remote monitoring server 400 receives measurement data from at least one of the distributed power supplies 11 and the EMS equipment 12, and manages the measurement data received. In a case of receiving a data request from the terminal apparatus 500, the remote monitoring server 400 transmits, to the terminal apparatus 500, the measurement data requested through the data request.

The terminal apparatus 500 is, for example, a Personal Computer (PC), a smartphone, a tablet terminal, or a dedicated terminal. The terminal apparatus 500 displays a monitoring screen for monitoring the state of each equipment of the facility 10, and displays measurement data from the remote monitoring server 400 on the monitoring screen. The terminal apparatus 500 may be installed with an application software dedicated to remote monitoring, or may display a monitoring screen on a general-purpose web browser. It is assumed that an entity that operates the terminal apparatus 500, that is, the entity that uses the remote monitoring service is a user who uses the distributed power supply (for example, a resident of the facility 10).

### Configuration Example of Facility

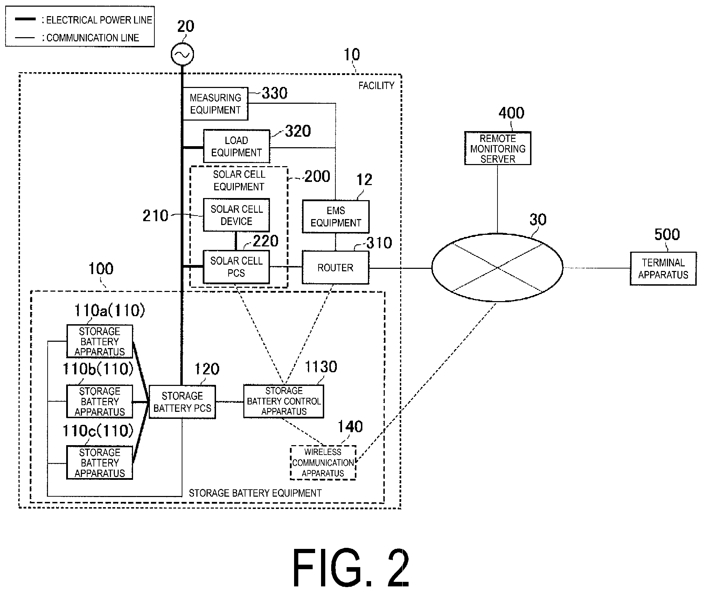

Now, a configuration example of the facility 10 will be described. FIG. 2 is a diagram illustrating a configuration of the facility 10 according to an embodiment. In FIG. 2, thick lines between blocks indicate electrical power lines, and thin lines indicate signal lines. Note that, the present embodiment is not limited this configuration, the electrical power lines may be used to transmit signals. The signal lines may be configured by wire or by radio.

As illustrated in FIG. 2, the facility 10 includes a router 310. The router 310 is connected to the network 30. The router 310 constitutes a local area network provided in the facility 10.

In an embodiment, the facility 10 includes storage battery equipment 100, solar cell equipment 200, load equipment 320, measuring equipment 330, and EMS equipment 12. The storage battery equipment 100 is an example of a distributed power supply, and the solar cell equipment 200 is another example of a distributed power supply. In other embodiments, the facility 10 need not include one of the storage battery equipment 100 and the solar cell equipment 200, or may include fuel cell equipment as a distributed power supply.

In an embodiment, the storage battery equipment 100 includes a plurality of storage battery apparatuses 110 (110a to 110c) and a storage battery Power Conditioning System (PCS) 120. In another embodiment, only one storage battery apparatus 110 may constitute the storage battery equipment 100.

Each of the storage battery apparatuses 110 is an apparatus that accumulates electrical power. Each of the storage battery apparatuses 110 includes a plurality of cells, and a Battery Management System (BMS) that manages the plurality of cells. Each of the storage battery apparatuses 110 is connected to the storage battery PCS 120 via an electrical power line. Under the control of the storage battery PCS 120, each of the storage battery apparatuses 110 is charged with electrical power input via an electrical power line, and outputs electrical power by discharging.

The storage battery equipment 100 may be configured so that the storage battery apparatus 110 can be added to the storage battery equipment 100. For example, first, the storage battery apparatus 110a may exclusively be connected to the storage battery PCS 120, and then the storage battery apparatuses 110b and 110c may be appropriately added to the storage battery PCS 120. The storage battery equipment 100 may be configured such that the storage battery apparatus 110 can be removed from the storage battery equipment 100 or replaced. For example, in a case that the storage battery apparatus 110a is degraded, the degraded storage battery apparatus 110a may be removed, and then a new storage battery apparatus 110a may be connected to the storage battery PCS 120.

In an embodiment, the storage battery equipment 100 includes a storage battery PCS 120, a storage battery control apparatus 130, and a wireless communication apparatus 140. In another embodiment, the storage battery equipment 100 need not include the wireless communication apparatus 140.

The storage battery PCS 120 is a power conversion apparatus that converts direct current power into alternating current power. During discharging, the storage battery PCS 120 converts direct current power input from each of the storage battery apparatuses 110 into alternating current power, and outputs the alternating current power to the power grid 20 side. During charging, the storage battery PCS 120 converts alternating current power supplied from the power grid 20 side into direct current power, and outputs the direct current power to each of the storage battery apparatuses 110.

The storage battery PCS 120 controls each of the storage battery apparatuses 110 by communicating with the BMS of each of the storage battery apparatuses 110 via a communication line, and acquires measurement data from each of the storage battery apparatuses 110. Additionally, the storage battery PCS 120 acquires measurement data obtained by performing measurement on the storage battery PCS 120. The storage battery PCS 120 communicates with the storage battery control apparatus 130 via a communication line to receive a command from the storage battery control apparatus 130 and to transmit measurement data to the storage battery control apparatus 130. The measurement data related to the storage battery apparatus 110 is referred to as a storage battery measurement data.

The storage battery control apparatus 130 is an apparatus that controls the storage battery equipment 100 (in particular, the storage battery PCS 120). The storage battery control apparatus 130 can be regarded as an apparatus that controls each of the storage battery apparatuses 110 via the storage battery PCS 120. The storage battery control apparatus 130 acquires the storage battery measurement data from the storage battery PCS 120, and periodically transmits the storage battery measurement data to the remote monitoring server 400 via the router 310 or the wireless communication apparatus 140.

The storage battery control apparatus 130 may be a so-called remote control apparatus including a user interface. The storage battery control apparatus 130 notifies the user of information or receives input operations from the user. The storage battery control apparatus 130 controls the storage battery equipment 100 (in particular, the storage battery PCS 120) in response to an input operation from the user.

The wireless communication apparatus 140 is an apparatus that communicates wirelessly with a WWAN included in the network 30. The wireless communication apparatus 140 is configured separately from the storage battery control apparatus 130, and is connected to the storage battery control apparatus 130 via a communication line. "Configured separately" means that the wireless communication apparatus 140 is electrically (or communicatively) connected to the storage battery control apparatus 130, while not being physically connected to the storage battery control apparatus 130.

The wireless communication between the wireless communication apparatus 140 and the WWAN may comply with a cellular communication scheme or an LPWA scheme. By electrically connecting the wireless communication apparatus 140 to the storage battery control apparatus 130, a function to communicate with the network 30 can be imparted to the storage battery control apparatus 130.

The solar cell equipment 200 includes a solar cell device 210 and a solar cell PCS 220.

The solar cell device 210 is an apparatus that generates power in response to light reception. The solar cell device 210 outputs the generated direct current power to the solar cell PCS 220. The amount of power generated by the solar cell device 210 varies depending on the amount of solar radiation on the solar cell device 210.

The solar cell PCS 220 is a power conversion apparatus that converts direct current power into alternating current power. The solar cell PCS 220 converts the direct current power input from the solar cell device 210 into alternating current power and outputs AC power.

The solar cell PCS 220 communicates with the EMS equipment 12 via the router 310 to transmit, to the EMS equipment 12, solar cell measurement data related to the solar cell equipment 200. The solar cell measurement data is measurement data related to the solar cell device 210, and is data measured by the solar cell PCS 220.

The solar cell PCS 220 may transmit the solar cell measurement data to the storage battery control apparatus 130 in addition to transmitting the solar cell measurement data to the EMS equipment 12. In such a case, the storage battery control apparatus 130 may acquire solar cell measurement data from the solar cell PCS 220, and periodically transmit the solar cell measurement data with storage battery measurement data to the remote monitoring server 400 via the router 310 or wireless communication apparatus 140.

The load equipment 320 is an apparatus that consumes electrical power supplied via an electrical power line. For example, the load equipment 320 includes an apparatus such as a refrigerator, a light, an air conditioner, and/or a television. The load equipment 320 may be a single apparatus, or may include a plurality of apparatuses.

The measuring equipment 330 is an apparatus that measures a forward power flow corresponding to a flow of electrical power from the power grid 20 to the facility 10, and a reverse power flow corresponding to a flow of electrical power from the facility 10 to the power grid 20. The measurement includes measurement of at least one of current, voltage, and electrical power. The measuring equipment 330 transmits the measurement data via the signal line to the EMS equipment 12.

The EMS equipment 12 is an apparatus that controls the solar cell equipment 200 and the load equipment 320. The EMS equipment 12 periodically transmits, to the remote monitoring server 400, the solar cell measurement data from the solar cell equipment 200 and the measurement data from the measuring equipment 330.

In the configuration example of the facility 10 illustrated in FIG. 2, the storage battery equipment 100 may be installed in the facility 10 in which the solar cell equipment 200 and the EMS equipment 12 controlling the solar cell equipment 200 are already installed. In such an installation scenario, the storage battery equipment 100 may accumulate electrical power output by the solar cell equipment 200, and supply the accumulated electrical power to the load equipment 320.

Note that, the configuration of the facility 10 illustrated in FIG. 2 is an example, and any other configuration may be assumed. For example, the facility 10 may include a plurality of pieces of solar cell equipment 200 and a plurality of pieces of EMS equipment 12. Each EMS equipment 12 manages one or more pieces of solar cell equipment 200. Each EMS equipment 12 may periodically transmit, to the remote monitoring server 400, the solar cell measurement data of the solar cell equipment 200, which is under the control of the EMS equipment 12.

The facility 10 may include a plurality of pieces of storage battery equipment 100. The plurality of pieces of storage battery equipment 100 may include first storage battery equipment that is under the control of the EMS equipment 12, and second storage battery equipment that is not under the control of the EMS equipment 12. In such an installation scenario, the EMS equipment 12 may periodically transmit the storage battery measurement data of the first storage battery equipment to the remote monitoring server 400, and the second storage battery equipment may periodically transmit the storage battery measurement data of the second storage battery equipment to the remote monitoring server 400.

### Server Apparatus

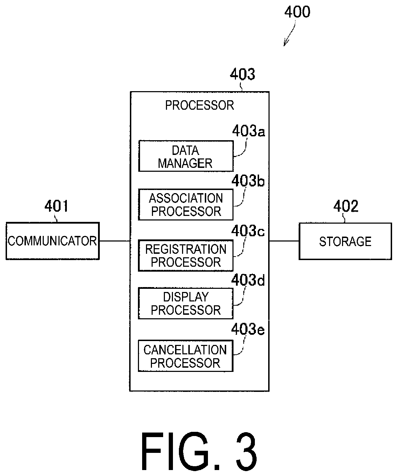

Now, the remote monitoring server 400 will be described. FIG. 3 illustrates a configuration of the remote monitoring server 400 according to an embodiment.

As illustrated in FIG. 3, the remote monitoring server 400 includes a communicator 401, a storage 402, and a processor 403.

The communicator 401 includes a transceiver and is connected to the network 30 to communicate with each facility 10 and each terminal apparatus 500 via the network 30. The communicator 401 periodically receives measurement data measured in each facility 10, and outputs the measurement data received to the processor 403.

In a case of receiving the data request from the terminal apparatus 500 via the network 30, the communicator 401 outputs the data request received to the processor 403. In this case, the communicator 401 transmits measurement data corresponding to the data request, to the terminal apparatus 500 under the control of the processor 403.

The storage 402 includes a volatile memory, a non-volatile memory, and an auxiliary storage apparatus, and stores various types of data and information. The storage 402 stores a program executed by the processor 403.

The processor 403 includes at least one processor, and controls the communicator 401 and the storage 402. The processor 403 controls the storage 402 to store and accumulate measurement data received by the communicator 401. When the communicator 401 receives the data request from the terminal apparatus 500, the processor 403 transmits measurement data via the communicator 401 to the terminal apparatus 500 having made this data request.

The processor 403 constitutes the functional sections of a data manager 403a, an association processor 403b, a registration processor 403c, a display processor 403d, and a cancellation processor 403e by executing programs stored in the storage 402.

The data manager 403a manages a database (DB) stored in the storage 402. For example, the data manager 403a manages an equipment information DB related to each equipment to be remotely monitored, a measurement data DB including measurement data from each equipment, and a user information DB related to the user.

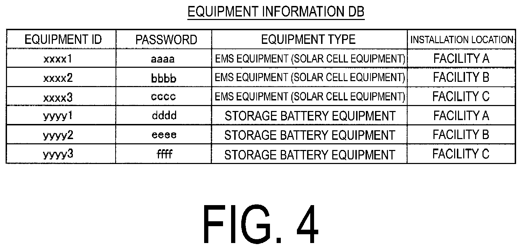

FIG. 4 illustrates the equipment information DB according to an embodiment.

As illustrated in FIG. 4, the equipment information DB includes an equipment ID (equipment identifier), a password, an equipment type, and an installation location for each equipment to be remotely monitored.

The equipment ID is an equipment identifier specific to the equipment. The password is authentication information utilized before an association process is executed by the association processor 403b. Before the association process is executed, the user executes process of login to the remote monitoring server 400 (remote monitoring service) using the equipment ID and the password. In this case, the monitoring screen including the measurement data of the equipment to be remotely monitored is provided for each equipment. Thus, in a case that a plurality of pieces of equipment are to be monitored by the user, the login process is executed for each equipment, and remote monitoring is performed with the monitoring screen for each equipment switched.

The equipment type is information indicating the type of the equipment. In FIG. 4, two types, that are the EMS equipment 12 and the storage battery equipment 100 are illustrated as the equipment types. It is assumed that the solar cell equipment 200 is under the control of the EMS equipment 12, and thus FIG. 4 represents "EMS (solar cell equipment)."

The installation location is an identifier indicating a location where the equipment is installed.

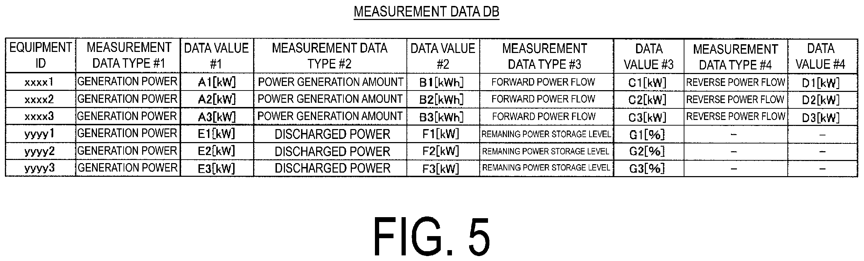

FIG. 5 is a diagram illustrating the measurement data DB according to an embodiment.

As illustrated in FIG. 5, the measurement data DB includes a plurality of sets of measurement data types and data values for each equipment to be remotely monitored.

In the example illustrated in FIG. 5, the equipment IDs "xxxxl" to "xxxx3" correspond to the EMS equipment 12, and the illustrated measurement data types include generation power ([kW]), a power generation amount ([kWh]), a forward power flow ([kW]), and a reverse power flow ([kW]).

On the other hand, the equipment IDs "yyyyl" to "yyyy3" correspond to the storage battery equipment 100, and the illustrated measurement data types include charged power ([kW]), discharged power ([kW]), and a remaining power storage level ([%]).

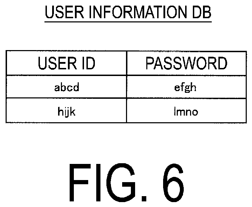

FIG. 6 is a diagram illustrating the user information DB according to an embodiment.

As illustrated in FIG. 6, the user information DB includes a user ID and a password for each user.

The user ID is a user identifier specific to the user of the equipment to be remotely monitored. The user ID is assigned to the user by the association processor 403b.

The password is authentication information utilized after the association process is executed by the association processor 403b.

The association processor 403b, the registration processor 403c, the display processor 403d, and the cancellation processor 403e execute processing using the DBs managed by the data manager 403a.

Firstly, for each equipment to be remotely monitored, the association processor 403b associates the equipment ID specific to the equipment with the user ID specific to the user.

For example, in a case that the user executes process of login to the remote monitoring server 400 (remote monitoring service) by using an equipment ID and a password for one piece of equipment and then performs an association operation by using an equipment ID and a password for another piece of equipment, the association processor 403b assigns a user ID and a password to the user. Additionally, the association processor 403b associates the equipment ID of the one piece of equipment and the equipment ID of such another piece of equipment with the user ID.

After the association process is executed by the association processor 403b, the user can use the user ID and the password to execute process of login to the remote monitoring server 400 (remote monitoring service). Thus, the association process can be considered to be a process of integrating the account per equipment with the account per user.

Secondly, in a case that a specific user selects a combination of two or more pieces of equipment associated with the user ID of the specific user, the registration processor 403c registers the combination of the two or more pieces of equipment as a combination of equipment displayed on an identical monitoring screen. For example, after the association process is executed by the association processor 403b, the registration processor 403c registers a combination of equipment IDs selected from among the plurality of equipment IDs associated with one user ID.

After the registration process is executed by the registration processor 403c, the user can monitor the registered combination of equipment (equipment IDs) on one monitoring screen. Thus, the registration process by the registration processor 403c can be considered to be a process of integrating the monitoring screens for the respective equipment into one monitoring screen.

In the registration process executed by the registration processor 403c, master equipment preferentially displayed on the monitoring screen and slave equipment other than the master equipment can be registered. In a case that a combination of the distributed power supply and the EMS equipment is selected as a combination of two or more pieces of equipment, then for the distributed power supply and the EMS equipment, the registration processor 403c may register the EMS equipment as the master equipment. In a case that the combination of first EMS equipment and second EMS equipment is selected by the user as a combination of two or more pieces of equipment, the registration processor 403c may register, as the master equipment, the EMS equipment selected from the first EMS equipment and the second EMS equipment by the user. In the following, the master equipment may be referred to as a main, and the slave equipment may be referred to as a member.

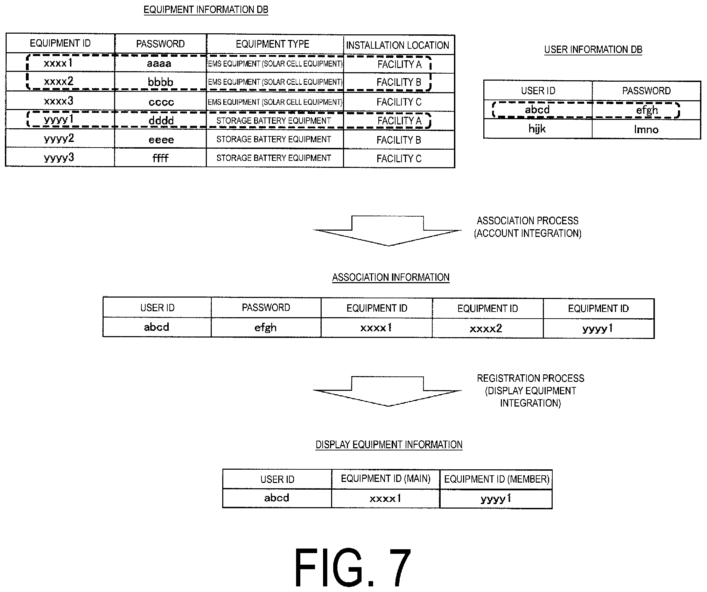

FIG. 7 is a diagram illustrating an example of the association process executed by the association processor 403b and an example of the registration process executed by the registration processor 403c according to an embodiment.

As illustrated in FIG. 7, based on a user operation, the association processor 403b associates the EMS equipment 12 with the equipment ID "xxxx1," the EMS equipment 12 with the equipment ID "xxxx2," and the storage battery equipment 100 with the equipment ID "yyyyl" with the user ID "abed." Here, the installation location of the EMS equipment 12 with the equipment ID "xxxxl" is "facility A," the installation location of the EMS equipment 12 with the equipment ID "xxxx2" is "facility B," and the installation location of the storage battery equipment 100 with the equipment ID "yyyy1" is "facility A." As a result, the association processor 403b generates association information including the user ID "abed," the password "efgh," the equipment ID "xxxx1," the equipment ID "xxxx2," and the equipment ID "yyyy1," and causes the storage 402 to store the association information generated.

Then, based on the user operation, the registration processor 403c registers a combination of the equipment ID "xxxxl" and the equipment ID "yyyyl" from among the plurality of equipment IDs included in the association information, as a combination of equipment displayed on the identical monitoring screen. As a result, the registration processor 403c generates display equipment information including the user ID "abed", the equipment ID "xxxx1", and the equipment ID "yyyy1," and causes the storage 402 to store the display equipment information generated.

Once the display equipment information is generated, by executing the process of login to the remote monitoring server 400, the user with the user ID "abcd" can collectively check, on the identical monitoring screen, measurement data acquired from the EMS equipment 12 with the equipment ID "xxxxl" and measurement data acquired from the storage battery equipment 100 with the equipment ID "yyyy1."

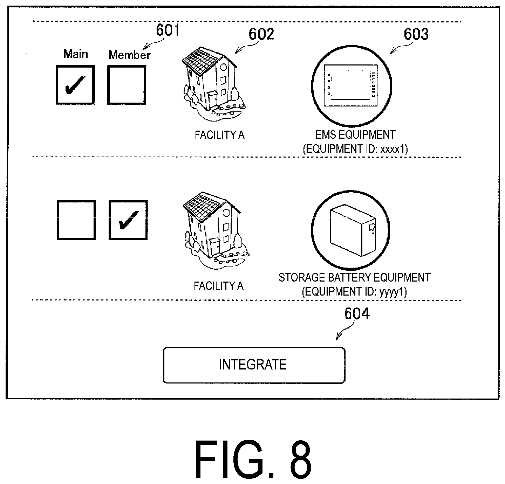

FIG. 8 is a diagram illustrating an example of a display screen displayed on the terminal apparatus 500 during the registration process executed by the registration processor 403c according to an embodiment.

As illustrated in FIG. 8, the display screen during the registration process includes a display object 601 (a check box) for selecting either the main or the member for each equipment ID included in the association information, a display object 602 indicating the installation location of the equipment, and a display object 602 indicating the appearance and equipment ID of the equipment. Here, the EMS equipment 12 with the equipment ID "xxxxl" is selected as the main, and the storage battery equipment 100 with the equipment ID "yyyyl" is selected as the member.

In such a selection state, when the user selects an "Integrate" button 604, the registration processor 403c registers a combination of the EMS equipment 12 with the equipment ID "xxxx1," corresponding to the main, and the storage battery equipment 100 with the equipment ID "yyyy1," corresponding to the member. In other words, the registration processor 403c generates display equipment information as illustrated in FIG. 7.

Thirdly, the display processor 403d displays, on the terminal apparatus 500 of the specific user, a monitoring screen indicating measurement data acquired from each of the two or more pieces of equipment registered by the registration processor 403c. Specifically, based on the measurement data DB (see FIG. 5) managed by the data manager 403a and the combination of the equipment IDs included in the display equipment information (see FIG. 7) generated by the registration processor 403c, the display processor 403d displays measurement data of the corresponding equipment on the identical monitoring screen.

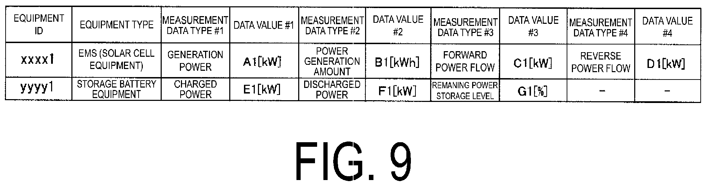

FIG. 9 is a diagram illustrating an example of measurement data included in a monitoring screen the display processor 403d causes the terminal apparatus 500 to display according to an embodiment.

As illustrated in FIG. 9, based on the equipment ID "xxxxl" and the equipment ID "yyyyl" corresponding to the combination of the equipment IDs included in the display equipment information (see FIG. 7) generated by the registration processor 403c, the display processor 403d extracts the measurement data corresponding to the equipment ID "xxxxl" and the measurement data corresponding to the equipment ID "yyyyl" from the measurement data DB (see FIG. 5) managed by the data manager 403a, and displays the measurement data extracted on the identical monitoring screen.

The display processor 403d basically displays, on the monitoring screen, the measurement data acquired from each of the two or more pieces of equipment registered by the registration processor 403c. The measurement data acquired from the registered two or more pieces of equipment includes first measurement data for a first distributed power supply and second measurement data for a second distributed power supply. For example, the first distributed power supply is one of the storage battery equipment 100 and the solar cell equipment 200 (EMS equipment 12), and the second distributed power supply is one of the storage battery equipment 100 and the solar cell equipment 200 (EMS equipment 12).

The display processor 403d executes a process corresponding to each of cases (a) to (c) described below depending on the combination of the two or more pieces of equipment registered by the registration processor 403c.
(a) A case where the first distributed power supply and the second distributed power supply are different from each other, and the first distributed power supply and the second distributed power supply belong to different distributed power supply types (case 1):
   In this case (case 1), the display processor 403d displays each of the first measurement data for the first distributed power supply and the second measurement data for the second distributed power supply on the identical monitoring screen. For example, as illustrated in FIGS. 7 to 9, in a case that the combination of the EMS equipment 12 (the solar cell equipment 200) and the storage battery equipment 100 is registered by the registration processor 403c, the measurement data of the solar cell equipment 200 and the measurement data of the storage battery equipment 100 are displayed on the identical monitoring screen.
(b) A case where the first distributed power supply and the second distributed power supply are different from each other, and the first distributed power supply and the second distributed power supply belong to an identical distributed power supply type (case 2):

In this case (case 2), the display processor 403d displays, on the monitoring screen, the summed data obtained by summing the first measurement data of the first distributed power supply and the second measurement data of the second distributed power supply. Specifically, the display processor 403d displays the summed data on the monitoring screen by summing the first measurement data and the second measurement data for each measurement data type. The user may be able to select whether such summation is performed.

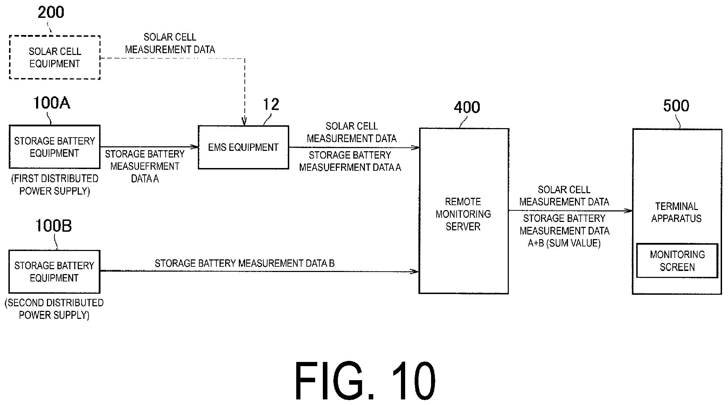

FIG. 10 is a diagram illustrating an example of case 2. FIG. 10 illustrates an example in which two pieces of storage battery equipment 100 are present. One piece of storage battery equipment 100A and the other piece of storage battery equipment 100B may be provided in the identical facility 10, or may be provided in different facilities 10 (for example, the facilities 10a and 10b illustrated in FIG. 1).

As illustrated in FIG. 10, the combination of the EMS equipment 12 (the solar cell equipment 200) and the storage battery equipment 100B is registered by the registration processor 403c, and the storage battery equipment 100A is under the control of the EMS equipment 12. The remote monitoring server 400 receives, from the EMS equipment 12, the solar cell measurement data of the solar cell equipment 200 and the storage battery measurement data A of the storage battery equipment 100A, and also receives the storage battery measurement data B of the storage battery equipment 100B from the storage battery equipment 100B. The remote monitoring server 400 (display processor 403d) causes the solar cell measurement data of the solar cell equipment 200 to be displayed on the monitoring screen of the terminal apparatus 500, and causes the storage battery measurement data A+B (the sum value for each measurement data type) to be displayed on the monitoring screen of the terminal apparatus 500.

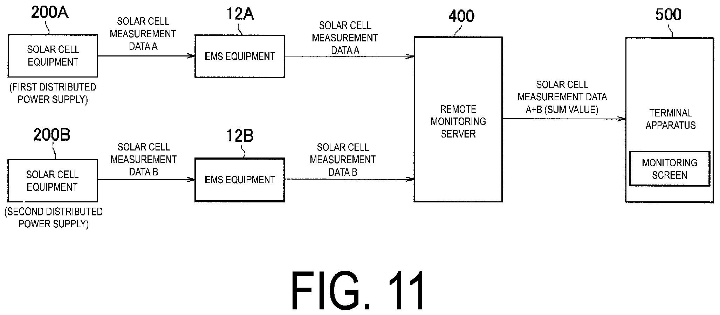

FIG. 11 illustrates another example of case 2. FIG. 11 illustrates an example in which two sets of the solar cell equipment 200 and the EMS equipment 12 are present. One set of a solar cell equipment 200A and EMS equipment 12A, and the other set of a solar cell equipment 200B and EMS equipment 12B may be provided in the identical facility 10, or may be provided in different facilities 10 (e.g., the facilities 10a and 10b illustrated in FIG. 1).

As illustrated in FIG. 11, the combination of the EMS equipment 12A (solar cell equipment 200A) and the EMS equipment 12B (solar cell equipment 200B) is registered by the registration processor 403c. The remote monitoring server 400 receives solar cell measurement data A of the solar cell equipment 200A from the EMS equipment 12A and receives the solar cell measurement data B of the solar cell equipment 200B from the EMS equipment 12B. The remote monitoring server 400 (display processor 403d) causes the solar cell measurement data A + B (the sum value for each measurement data type) to be displayed on the monitoring screen of the terminal apparatus 500.

(c) a case where the first distributed power supply and the second distributed power supply are identical (case 3):

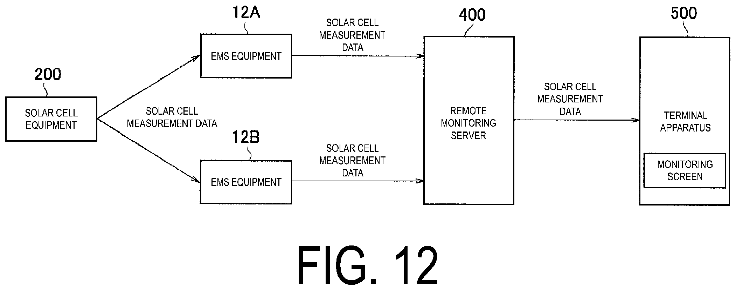

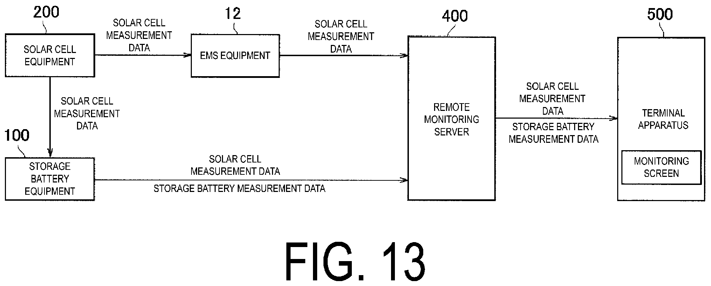

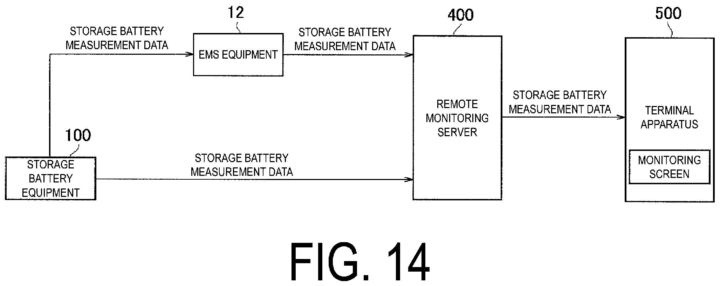

In such a case, one distributed power supply may be under the control of two pieces of EMS equipment 12, and each of the two pieces of EMS equipment 12 may transmit measurement data of the identical distributed power supply to the remote monitoring server 400 (see FIG. 12). Alternatively, there is a case where the storage battery control apparatus 130 of the storage battery equipment 100 includes a function similar to that of the EMS equipment 12, and the storage battery control apparatus 130 transmits measurement data of the solar cell equipment 200 to the remote monitoring server 400, and the EMS equipment 12 transmits the measurement data of the solar cell equipment 200 to the remote monitoring server 400 (see FIG. 13). Alternatively, in one case, the storage battery control apparatus 130 transmits measurement data to both the EMS equipment 12 and the remote monitoring server 400, and the EMS equipment 12 transfers the measurement data to the remote monitoring server 400 (see FIG. 14).

In this case (case 3), for the first measurement data for the first distributed power supply and the second measurement data for the second distributed power supply, the display processor 403d does not display one of the measurement data on the monitoring screen but displays the other measurement data on the monitoring screen. In other words, the display processor 403d executes a process of eliminating one of the overlapping measurement data (overlapping measurement data type).

For example, in a case that the first distributed power supply and the second distributed power supply are identical and the EMS equipment is registered as the master equipment, the display processor 403d may display, on the monitoring screen, measurement data acquired from the EMS equipment instead of displaying, on the monitoring screen, measurement data acquired from the distributed power supply.

In a case that the first distributed power supply and the second distributed power supply are identical and the first EMS equipment is registered as the master equipment, the display processor 403d may display, on the monitoring screen, measurement data acquired from the first EMS equipment instead of displaying, on the monitoring screen, measurement data acquired from the second EMS equipment.

FIG. 12 is a diagram illustrating an example of case 3. As illustrated in FIG. 12, a combination of two pieces of EMS equipment 12 (12A and 12B) is registered by the registration processor 403c, and an identical solar cell equipment 200 is under the control of the EMS equipment 12A and EMS equipment 12B. The solar cell equipment 200 transmits solar cell measurement data to the EMS equipment 12A and EMS equipment 12B, and each of the EMS equipment 12A and EMS equipment 12B transfers the solar cell measurement data to the remote monitoring server 400. The remote monitoring server 400 receives the solar cell measurement data of the solar cell equipment 200 from both the EMS equipment 12A and EMS equipment 12B. For the overlapping solar cell measurement data received (overlapping measurement data type), the remote monitoring server 400 (display processor 403d) displays, on the monitoring screen, the storage battery measurement data from the EMS equipment 12 (12A or 12B) registered as the master equipment. Here, an example in which the distributed power supply is the solar cell equipment 200 has been described, but instead of the solar cell equipment 200, the storage battery equipment 100 may be under the control of the EMS equipment 12A and EMS equipment 12B.

FIG. 13 illustrates another example of case 3. As illustrated in FIG. 13, the combination of the EMS equipment 12 (the solar cell equipment 200) and the storage battery equipment 100 is registered by the registration processor 403c, and each of the EMS equipment 12 and the storage battery equipment 100 transfers the solar cell measurement data to the remote monitoring server 400. The remote monitoring server 400 receives solar cell measurement data of the solar cell equipment 200 from both the EMS equipment 12A and the storage battery equipment 100. For the overlapping solar cell measurement data (overlapping measurement data type) received, the remote monitoring server 400 (display processor 403d) displays, on the monitoring screen, storage battery measurement data from the EMS equipment 12 registered as the master equipment. Alternatively, in a case that the storage battery equipment 100 is registered as the master equipment, then for the overlapping solar cell measurement data (overlapping measurement data type) received, the remote monitoring server 400 (display processor 403d) displays, on the monitoring screen, storage battery measurement data from the storage battery equipment 100 registered as the master equipment.

FIG. 14 is a diagram illustrating still another example of case 3. As illustrated in FIG. 14, the combination of the EMS equipment 12 and the storage battery equipment 100 is registered by the registration processor 403c, the storage battery equipment 100 transmits storage battery measurement data to the remote monitoring server 400, and the EMS equipment 12 transfers storage battery measurement data to the remote monitoring server 400. The remote monitoring server 400 receives the storage battery measurement data of the storage battery equipment 100 from both the EMS equipment 12A and the storage battery equipment 100. For the overlapping storage battery measurement data (overlapping measurement data type) received, the remote monitoring server 400 (display processor 403d) displays, on the monitoring screen, the storage battery measurement data from the EMS equipment 12 registered as the master equipment. Alternatively, in a case that the storage battery equipment 100 is registered as the master equipment, then for the overlapping solar cell measurement data (overlapping measurement data type) received, the remote monitoring server 400 (display processor 403d) displays, on the monitoring screen, storage battery measurement data from the storage battery equipment 100 registered as the master equipment.

As described above, in the remote monitoring server 400, the association processor 403b associates the equipment ID specific to the equipment with the user ID specific to the user for each equipment to be remotely monitored. In a case that a specific user selects a combination of two or more pieces of equipment associated with the user ID of the specific user, the registration processor 403c registers the combination of the two or more pieces of equipment as a combination of equipment displayed on the identical monitoring screen. Thus, in a case that one user uses a plurality of distributed power supplies, the user can check the power status of the plurality of distributed power supplies at a time, allowing the convenience of the user to be improved.

The cancellation processor 403e executes, based on the user operation, a process of canceling the display equipment registration by the registration processor 403c and the account integration by the association processor 403b.

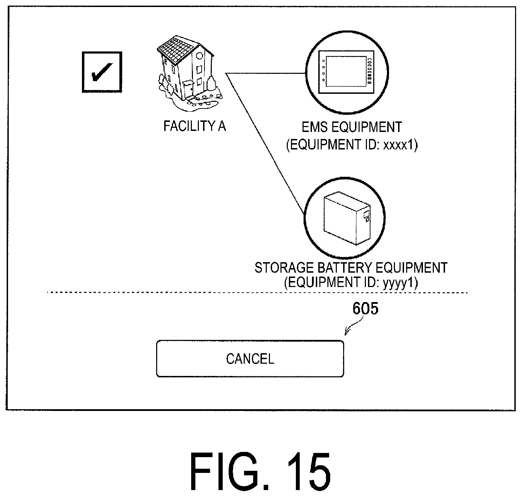

For example, in a case that the user selects cancellation of registration of a combination of two or more pieces of equipment by the registration processor 403c, the cancellation processor 403e cancels the registration. In a case that the registration is canceled, the display processor 403d displays, on different monitoring screens, the measurement data acquired from each of the two or more pieces of equipment associated with one user ID. FIG. 15 is a diagram illustrating an example of a display screen displayed on the terminal apparatus 500 during cancellation process executed by the cancellation processor 403e according to an embodiment. As illustrated in FIG. 15, when the user selects a "Cancel" button 605, the cancellation processor 403e cancels the registration of the combination of the two or more pieces of equipment by the registration processor 403c.

In a case that the user selects cancellation of the association between the user ID and the equipment ID, the cancellation processor 403e cancels the association. In a case that the association is canceled, the user executes the process of login to the remote monitoring server 400 for each equipment.

### Operation Sequence Example

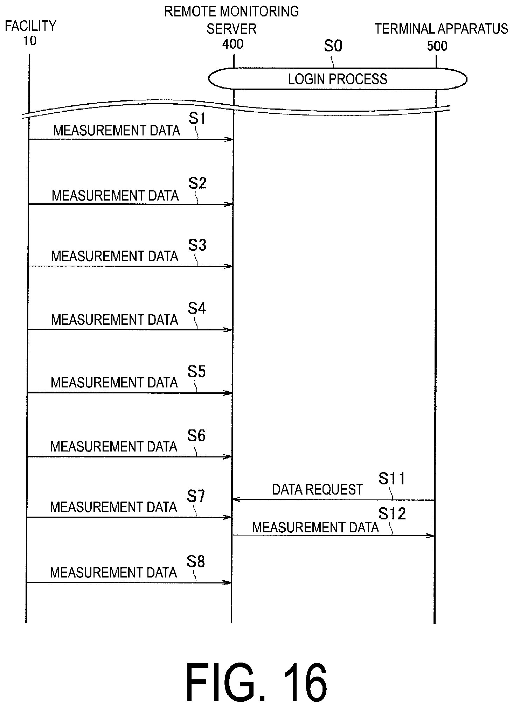

Now, an example of an operation sequence in the power management system 1 will be described. FIG. 16 is a diagram illustrating an operation sequence in the power management system 1 according to an embodiment. Here, it is assumed that the registration process by the registration processor 403c is completed.

As illustrated in FIG. 16, in step S0, by transmitting the user ID and the password to the remote monitoring server 400, the terminal apparatus 500 executes the process of login to the remote monitoring server 400. A login state may be maintained until a logout operation is performed.

In steps S1 to S8, the communicator 401 of the remote monitoring server 400 receives, from the facility 10, the measurement data obtained in the facility 10. Each time the communicator 401 receives measurement data, the data manager 403a of the remote monitoring server 400 updates the measurement data DB (see FIG. 5) with the measurement data received.

In step S11, the processor 403 of the remote monitoring server 400 receives a data request from the terminal apparatus 500 via the communicator 401.

In step S12, based on the user ID of the user of the terminal apparatus 500 having made the data request, the processor 403 of the remote monitoring server 400 transmits, to the terminal apparatus 500, the measurement data for each equipment registered by the registration processor 403c for the user ID. The terminal apparatus 500 displays a monitoring screen including measurement data for each equipment.

### Other Embodiments

In the embodiments described above, communication of predetermined messages conforming to a predetermined protocol may be performed as the communication between the apparatuses. The predetermined protocol is, for example, an ECHONET Lite scheme, SEP2.0, KNX, Open Automatic Demand Response (ADR), or the like.

A program causing a computer to execute each process performed by the storage battery control apparatus 130 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM, a DVD-ROM, or the like.

Embodiments have been described above in detail with reference to the drawings, but specific configurations are not limited to those described above, and various design modifications can be made without departing from the gist of the present disclosure.

Note that the UN Summit of September, 2015 adopted "Sustainable Development Goals (SDGs)" as 17 international goals. The server apparatus and the management method according to an embodiment may contribute to achieving, for example, "7. Affordable and Clean Energy," "9. Industry, Innovation, and Infrastructure," and " 11. Sustainable Cities and Communities," included in the 17 SDGs, and the like.

The present application claims priority to Japanese Patent Application No. 2019-195530, filed on October 28, 2019, the contents of which are incorporated herein by reference in their entirety.

## Claims

1. A server apparatus managing a plurality of pieces of equipment that includes one or more distributed power supplies, the server apparatus comprising
a processor configured to execute
an association process of associating, for each of the plurality of pieces of equipment, an equipment identifier specific to a piece of equipment, with a user identifier specific to a user of the piece of equipment, and
a registration process of registering, in a case that a specific user selects a combination of two or more pieces of equipment associated with a user identifier of the specific user, the combination of the two or more pieces of equipment as a combination of equipment to be displayed on an identical monitoring screen.

2. The server apparatus according to claim 1, wherein
the processor is further configured to execute a display process of displaying, on a terminal apparatus of the specific user, a monitoring screen indicating measurement data acquired from each of the two or more pieces of equipment registered.

3. The server apparatus according to claim 2, wherein
the measurement data acquired from the two or more pieces of equipment registered includes first measurement data of a first distributed power supply and second measurement data of a second distributed power supply, and
the display process includes a process of displaying each of the first measurement data and the second measurement data on the monitoring screen in a case that the first distributed power supply and the second distributed power supply are different from each other and that the first distributed power supply and the second distributed power supply belong to different distributed power supply types.

4. The server apparatus according to claim 3, wherein
the display process includes a process of displaying, on the monitoring screen, summed data obtained by summing the first measurement data and the second measurement data in a case that the first distributed power supply and the second distributed power supply are different from each other and that the first distributed power supply and the second distributed power supply belong to an identical distributed power supply type.

5. The server apparatus according to claim 3 or 4, wherein
the display process includes a process of displaying, on the monitoring screen, one piece of measurement data out of the first measurement data and the second measurement data on the monitoring screen without displaying, on the monitoring screen, another piece of measurement data out of the first measurement data and the second measurement data in a case that the first distributed power supply is identical to the second distributed power supply.

6. The server apparatus according to claim 5, wherein
the plurality of pieces of equipment further include one or more power management apparatuses, and
the registration process includes
a process of registering the power management apparatus, out of the distributed power supply and the power management apparatus, as master equipment to be preferentially displayed on the monitoring screen, in a case that the specific user selects a combination of the distributed power supply and the power management apparatus as the combination of the two or more pieces of equipment.

7. The server apparatus according to claim 6, wherein
the display process includes
a process of displaying measurement data acquired from the power management apparatus on the monitoring screen without displaying measurement data acquired from the distributed power supply on the monitoring screen, in a case that the first distributed power supply and the second distributed power supply are identical and that the power management apparatus is registered as the master equipment.

8. The server apparatus according to claim 5, wherein
the plurality of pieces of equipment further include one or more power management apparatuses, and
the registration process includes
a process of registering the power management apparatus selected by the specific user, out of the first power management apparatus and the second power management apparatus, as master equipment to be preferentially displayed on the monitoring screen, in a case that the specific user selects a combination of first power management apparatus and second power management apparatus as the combination of the two or more pieces of apparatus.

9. The server apparatus according to claim 8, wherein
the display process includes
a process of displaying measurement data acquired from the first power management apparatus on the monitoring screen without displaying measurement data acquired from the second power management apparatus on the monitoring screen, in a case that the first distributed power supply is identical to the second distributed power supply and that the first power management apparatus is registered as the master equipment.

10. The server apparatus according to any one of claims 1 to 9, wherein
the processor further is configured to execute
a cancellation process of canceling the registration, in a case that the specific user selects cancellation of a registration of the combination of the two or more pieces of equipment.

11. The server apparatus according to claim 10, wherein
the processor further is configured to execute a process of displaying, on a different monitoring screen, measurement data acquired from each of the two or more pieces of equipment associated with the user identifier of the specific user in a case that the registration is canceled.

12. A management method for managing a plurality of pieces of equipment comprising one or more distributed power supplies, the management method comprising:
associating, for each of the plurality of pieces of equipment, an equipment identifier specific to a piece of equipment, among the plurality of pieces of equipment, with a user identifier specific to a user of the piece of equipment; and
registering, in a case that a specific user selects a combination of two or more pieces of equipment associated with a user identifier of the specific user, the combination of the two or more pieces of equipment as a combination of equipment to be displayed on an identical monitoring screen.
